# EUROPEAN PATENT APPLICATION

(11) **EP 3 597 529 A1**
(43) Date of publication of application: **22.01.2020**
(21) Application number: 18183633.9
(22) Date of filing: 16.07.2018
(51) Int. Cl.: B64C 3/26, B64C 3/20, B64C 3/18, B29D 99/00, B29C 70/08

(54) **WING STRUCTURE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

An aircraft wing 6 is provided. The aircraft wing 6 comprises at least one structure 62, 64, 66 comprising: a foam core 626, 666; first and second carbon fibre composite layers 624a, 622a, 662a, 664a respectively attached to top and bottom sides of the foam core to sandwich the foam core; and third and fourth carbon fibre composite layers 624b, 622b, 662b, 664b respectively disposed adjacent to the first and second carbon fibre composite layers, wherein the total thickness of the structure is between 1mim and 11mm. An aircraft having the aircraft wing and a method of manufacturing a structure are also provided.

## Description

### FIELD OF THE INVENTION

The present invention relates to an aircraft having an aircraft wing and to the composite structures that make up that aircraft wing.

### BACKGROUND ART

Monocoque aircraft have structural skins. In other words, the aircraft loads are supported substantially by the external skin of the aircraft, rather than by trusses within the wings and fuselage. This type of construction, versus construction using trusses, is advantageous due to its light weight. However, where the strength of the skin, and hence aircraft as a whole, is determined by its thickness and material, careful optimisation must be made.

### SUMMARY

According to an aspect of the present invention, there is provided an aircraft wing, the aircraft wing comprising: at least one structure comprising: a foam core; first and second carbon fibre composite layers respectively attached to top and bottom sides of the foam core to sandwich the foam core; and third and fourth carbon fibre composite layers respectively disposed adjacent to the first and second carbon fibre composite layers, wherein the total thickness of the structure is between about 1mm and about 11mm.

The total thickness of the structure may be between about 2mm and about 9mm. More preferably, the total thickness of the structure is between about 2.5mm and about 7mm. More preferably, the total thickness of the structure is between about 2.8mm and about 6mm. Most preferably, the total thickness of the structure is between about 3mm and about 4mm.

The foam core may have a thickness of between about 1mm and about 10mm. The foam core may have a thickness of between about 1.5mm and about 8mm, about 2mm and about 8mm, about 2.5mm and about 6mm, or about 2.8mm and about 4mm. Preferably, the foam core has a thickness of about 3mm.

Preferably, the first, second, third and fourth carbon fibre composite layers are each between about 10µm and about 50µm thick. The first, second, third and fourth carbon fibre composite layers may be each between about 15µm and about 40µm thick or about 20µm and about 30µm thick. Most preferably, the first, second, third and fourth carbon fibre composite layers are each about 25µm thick.

The structure may be an upper skin, a lower skin or a spar, or any combination thereof. For example, the upper and lower skin both may be made up of the foam and carbon fibre composite layer make-up as defined herein. Preferably the upper skin and lower skin are joined to form an aerofoil and the wing further comprises a spar disposed between the upper skin and lower skin in the longitudinal direction of the wing structure. The upper skin and the lower skin may be bonded together at the leading edge of the aircraft wing structure by a leading-edge strip to form the aerofoil shape. The leading-edge strip may be made up of from 6 to 10 layers of carbon fibre composite layers, preferably 7 to 9 layers, more preferably 8 layers.

Preferably the upper skin and/or lower skin do not comprise a further carbon fibre composite layer to that of the first, second, third and fourth carbon fibre composite layers. In other words, the upper skin and/or lower skin may comprise a foam core (preferably, the foam core having a thickness of between about 1mm and about 10mm); and four carbon fibre composite layers, wherein the first and second carbon fibre composite layers are respectively attached to top and bottom sides of the foam core to sandwich the foam core; and third and fourth carbon fibre composite layers are respectively disposed adjacent to the first and second carbon fibre composite layers. Preferably, the first, second, third and fourth carbon fibre composite layers are each between about 10µm and about 50µm thick).

Preferably, mounted on the upper surface of the upper skin are solar arrays (solar cells). Electrical energy is generated from these solar cells and advantageously used to self-power the flight of the aircraft. The solar cells may be attached to the composite upper skin of the aircraft wing by any suitable method, for example a double-sided polyimide film with silicone adhesive. The solar cells may be protected by a polytetrafluoroethylene (PTFE) cover layer which may be bonded to the top surface of the solar cells using a suitable adhesive, such as a silicone adhesive.

The first and second carbon fibre composite layers may be attached to the top and bottom sides of the foam core by an adhesive. Any method of adhesion suitable for the aerospace industry and suitable for bonding foam cores may be used however it is preferable to use a resin. The resin may be any suitable resin binder, such as for example acrylate binder such as, for example, methylmethacrylate (MMA), an acrylic binder, an epoxy binder, a urethane & epoxy-modified acrylic binder, a polyurethane binder, an alkyd-based binder, preferably an epoxy binder. Preferably a curable epoxy resin is used. Preferably the resin is operational at high altitudes, such as above about 16000 metres. A specific example of a suitable curable epoxy resin is North Thin Ply Technologies (NTPT) GF736, which is an about 80°C curing epoxy film adhesive (unsupported i.e. no fibre support/carrier) with a glass transition temperature (T_{g}) of about 100°C. Preferably the epoxy resin is applied at about 25 to 150 g/m², about 25 to 100 g/m², about 25 to 50 g/m², about 25 to 30 g/m², most preferably at about 25 g/m². Advantageously curable epoxy resins, and this specific epoxy resin, provide good strain to failure, toughness, shear strength and peel strength and also consistent bond-line thickness.

The third and fourth carbon fibre composite layers are respectively disposed adjacent to the first and second carbon fibre composite layers. It is preferable that no additional adhesive/resin is used between the third and first layers and between the fourth and second carbon fibre composite layers. During the manufacturing process of the skins, the resin from the respective composite layers act to bond the third layer to the first layer and the fourth layer to the second layer. Not using additional adhesive/resin acts to minimise the weight of the skins and thus the wing.

The carbon fibre composite layers used in the present invention may comprise carbon (reinforcing) fibres held in a supporting resin matrix. In other words, the carbon fibres may be embedded or encapsulated in a resin binder matrix to form a composite ply. The carbon fibres may be PITCH (i.e. distillation of carbon-based product) based or PAN (Polyacrylonitrile) based carbon fibres, preferably PAN based. Ceramic or boron silicon carbide fibres may be used in place of or in addition to the carbon fibres. Particularly preferred carbon fibres are Mitsubishi Pyrofil™ TR50S, TRH50 or HS40 fibres, most preferably the HS40 fibre. The carbon fibres are cured at between about 95 to 110°c, preferably about 105°c.

The fibres may be woven or non-woven. They may be multi-directional or uni-directional. Preferably the fibres are uni-directional.

The resin may be any suitable resin binder, such as for example acrylate binder such as, for example, methylmethacrylate (MMA), an acrylic binder, an epoxy binder, a urethane & epoxy-modified acrylic binder, a polyurethane binder, an alkyd-based binder, preferably an epoxy binder. The resin may be a curable resin such as to form a cured resin composite. Preferably the resin is operational at high altitudes. Preferably the resin is a curable epoxy resin. Preferably the epoxy resin has a T_{g} of between about 150-200°C. A particularly preferred example is NTPT's Thinpreg 402 epoxy. This is a resin with a T_{g} of about 170-180°C, with a curing cycle of 2 hours at about 135°C, 2 hours at about 160°C.

Preferably, each carbon fibre composite layer comprises about 30 to 40 mass percent resin (e.g. epoxy resin such as Thinpreg 402) and about 60 to 70 mass percent carbon fibre (by total mass of the resin and carbon fibre). Each carbon fibre composite layer may comprise about 33 to 37 mass percent resin and about 63 to 67 mass percent carbon fibre. More preferably, each carbon fibre composite layer comprises about 35 mass percent resin and about 65 mass percent carbon fibre.

Each carbon fibre composite layer may have a glass transition temperature (T_{g}) greater than about 80 degrees Celsius (measured using any suitable method known to the skilled person such as a thermogravimetric analyser (TGA), e.g. SETARAM SESTYS Evolution, under an argon atmosphere from room temperature to about 700 °C at a heating rate of about 5°C/min).

Preferably, the carbon fibre composite layers are pre-impregnated composite layers (i.e. pre-preg composite layers).

The structures of the present invention comprise at least four fibre plies (e.g. the first, second, third and fourth carbon fibre composite layers) to impart strength to the final structure. It will be appreciated that more carbon fibre composite layers may be utilised to impart further strength.

Preferably the carbon fibres in one ply are orientated at about +45 degrees to the long axis of the skin and the adjacent ply has carbon fibres orientated at about -45 degrees to the long axis of the skin. In other words, adjacent plies have carbon fibres orientated such they are orthogonal to each other. This provides optimised torsional stiffness. For example, the carbon fibres in the first carbon fibre composite layer are orientated at about -45 degrees to the long axis of the skin and the carbon fibres in the third carbon fibre composite layer are orientated at about +45 degrees to the long axis of the skin. Further, the carbon fibres in the second carbon fibre composite layer are orientated at about -45 degrees to the long axis of the skin and the carbon fibres in the fourth carbon fibre composite layer are orientated at about +45 degrees to the long axis of the skin.

Advantageously this improves the torsional stiffness of the skins, and hence the wing as a whole. While orthogonal orientation is preferable, similar advantage tends to be achieved through having fibres arranged at other angles, such as about 70 degrees (for example, fibres in one layer arranged at about - 30 degrees and fibres in the other layer arranged at about +40 degrees).

The foam core may be a polymer foam core, for example a polyurethane, polyethylene or preferably a polymethacrylimide foam core. A specific example of suitable foam is Rohacell 31 IG-F. Other Rohacell examples include Rohacell 51 IG-F, Rohacell 71 IG-F, and Rohacell 110 IG-F

The spar may comprise an elongate panel, wherein top and bottom flanges of the panel curve away from the panel to couple the panel to the upper skin and lower skin. Preferably, the curve is between about 3mm and about 10mm in radius. More preferably, the curve is between about 4mm and about 6mm in radius. Most preferably, the curve is 5mm in radius.

Preferably, when the structure is a spar, there are more than four carbon fibre composite layers i.e. there are more than the first, second, third and fourth carbon fibre layers surrounding the foam core. Preferably the spar comprises a further twelve carbon fibre composite layers. This is because the spar is providing a structural function and takes the bending forces in the aircraft wing. Preferably, the spar further comprises: respectively disposed adjacent to the third and fourth carbon fibre composite layers, fifth and sixth carbon fibre composite layers; respectively disposed adjacent to the fifth and sixth carbon fibre composite layers, seventh and eighth carbon fibre composite layers; respectively disposed adjacent to the seventh and eighth carbon fibre composite layers, ninth and tenth carbon fibre composite layers; respectively disposed adjacent to the ninth and tenth carbon fibre composite layers, eleventh and twelfth carbon fibre composite layers; respectively disposed adjacent to the eleventh and twelfth carbon fibre composite layers, thirteenth and fourteenth carbon fibre composite layers; and respectively disposed adjacent to the thirteenth and fourteenth carbon fibre composite layers, fifteenth and sixteenth carbon fibre composite layers; wherein the first, second, third, fourth, fifth, sixth, seventh, eighth, ninth, tenth, eleventh, twelfth, thirteen, fourteenth, fifteenth and sixteenth carbon fibre composite layers are each between about 10µm and about 50µm thick.

The spar may be disposed at between 24% and 36% Mean Aerodynamic Chord. Preferably the spar is disposed at between 26 to 34, 28 to 32 or 29 to 31% Mean Aerodynamic Chord. Most preferably it is disposed at 30% Mean Aerodynamic Chord.

According to a further aspect of the present invention, there is provided an aircraft wing, the aircraft wing comprising : at least one structure comprising: a foam core, first and second carbon fibre composite layers respectively attached to top and bottom sides of the foam core to sandwich the foam core; and third and fourth carbon fibre composite layers respectively disposed adjacent to the first and second carbon fibre composite layers, wherein the maximum thickness of the aircraft wing is between about 1cm and 20cm. The maximum thickness of the aircraft wing may be between about 2 and 19, about 4 and 18, about 10 and 18, about 12 and 18, about 15 and 18 or between about 16 and 18cm. Preferably, the maximum thickness of the aircraft wing is about 17cm.

In a further aspect of the present invention, there is provided an aircraft comprising the aircraft wing as described herein, wherein the aircraft wing has an aspect ratio greater than 17:1. The aircraft is preferably a monocoque (e.g. a stressed skin-monocoque) high altitude long endurance aircraft. Preferably the aircraft is operational at 16,000 metres to 25,000 metres, most preferably 17000 metres to 21,000 metres. The aircraft is preferably designed to be operational at altitudes greater than 19,000 metres. Preferably the aircraft is an unmanned aircraft.

In a further aspect of the present invention, there is provided a method of manufacturing a structure, the method comprising:
providing a mould tool having a mould surface;
providing an uncured structure, the uncured structure comprising a foam core;
first and second carbon fibre composite layers respectively attached to top and bottom sides of the foam core to sandwich the foam core; and
third and fourth carbon fibre composite layers respectively disposed adjacent to the first and second carbon fibre composite layers;
   applying the uncured structure to the mould surface of the mould tool so as to form an assembly;
   curing the assembly so as to cure the uncured structure and mould the uncured structure against the mould surface, thereby producing the structure having a surface that is substantially the same shape as and contiguous with the mould surface, to provide an aircraft wing according to the first aspect.

The moulding preferably occurs using a 'single step' approach, in an oven with 1 atmosphere pressure.

Providing the uncured structure may comprise providing a foam core, adhering first and second carbon fibre composite layers respectively to the top and bottom sides of the foam core and disposing third and fourth carbon fibre composite layers respectively to the first and second carbon fibre layers.

The uncured structure may comprise further carbon fibre composite layers and providing the uncured structure may comprise, for example, respectively disposing adjacent to the third and fourth carbon fibre composite layers, fifth and sixth carbon fibre composite layers; respectively disposing adjacent to the fifth and sixth carbon fibre composite layers, seventh and eighth carbon fibre composite layers; respectively disposing adjacent to the seventh and eighth carbon fibre composite layers, ninth and tenth carbon fibre composite layers; respectively disposing adjacent to the ninth and tenth carbon fibre composite layers, eleventh and twelfth carbon fibre composite layers; respectively disposing adjacent to the eleventh and twelfth carbon fibre composite layers, thirteenth and fourteenth carbon fibre composite layers; and respectively disposing adjacent to the thirteenth and fourteenth carbon fibre composite layers, fifteenth and sixteenth carbon fibre composite layers.

Conveniently the use of a carbon fibre pre-preg (carbon fibres pre-impregnated with resin binder matrix) ply may be used to facilitate manufacture.

The method of the present invention may comprise curing the structure, for example at about 105°C, such that transition temperature (Tg) is greater than about 80°C.

The structure may be a spar, an upper skin or a lower skin. When the structure is an upper skin or lower skin a female mould is used so that the outer surface of the wing structure is the smooth moulded surface. In other words, an upper surface of the mould tool is a mould surface that defines the shape of the aircraft skin being produced.

The assembly may be placed into an autoclave, and the autoclave is controlled such that a cure cycle is run. Thus, the assembly is heated, and the uncured structure is cured.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the invention will now be described by way of example only and with reference to the accompanying drawings.
Figure 1 is a perspective view of an aircraft having the skin structure according to the present invention;
Figure 2 is a cross section of a wing structure having the skin structure according to the present invention;
Figure 3 is a side view of a wing skin structure according to the present invention;
Figure 4 is a side view of a spar structure according to the present invention; and

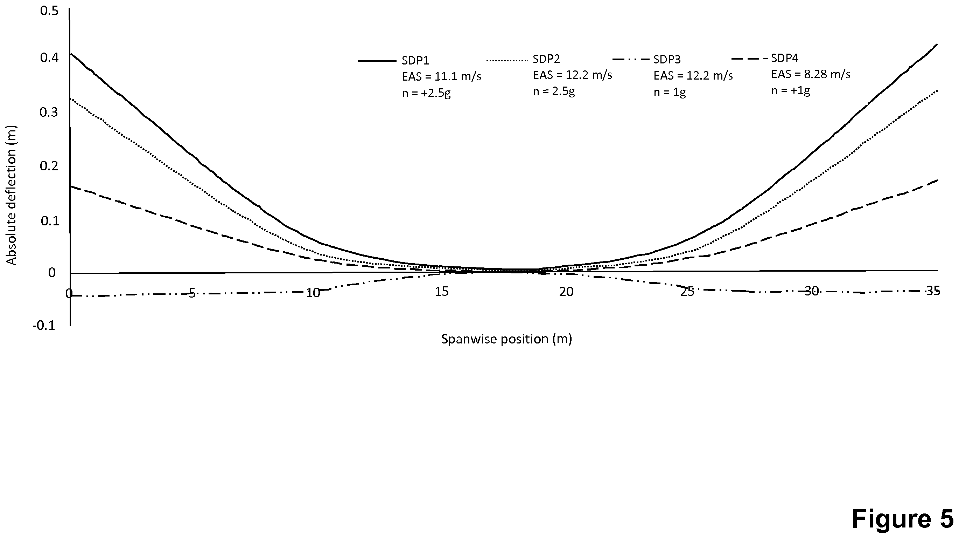

Figure 5 shows test results for a wing structure having the skin structure according to the present invention.

### DETAILED DESCRIPTION

Embodiments described herein generally relate to a skin and spar structures for use on aircraft. Primarily, the skin and spar structures are designed for use on monocoque aircraft, where the flight loads are distributed through and supported by the skin rather than internal structure of the airframe. The skin structure is designed to have a high strength to mass ratio.

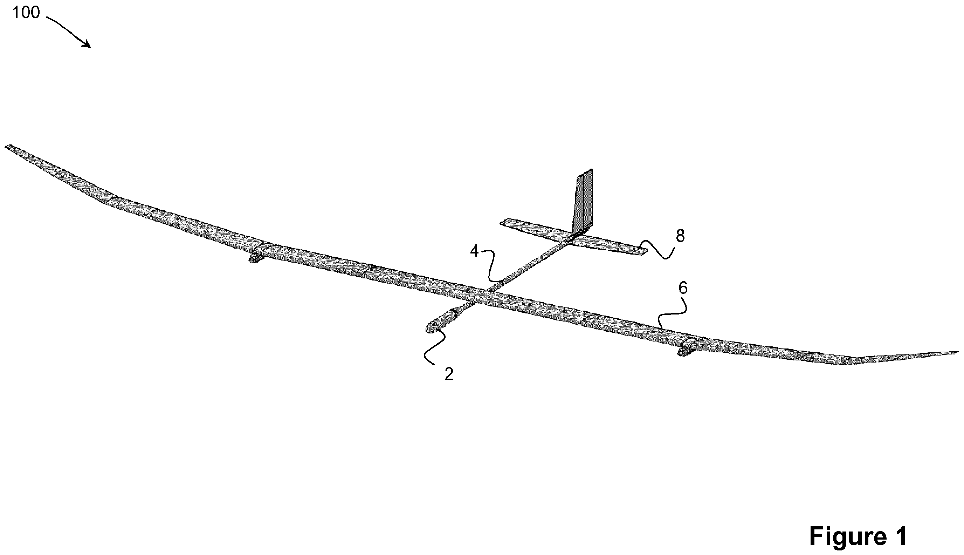

Figure 1 shows an aircraft 100 on which the skin structure is implemented. The aircraft 100 is a high-altitude long endurance (HALE) unmanned aircraft. However, the skin structure may also be implemented on other types of manned and unmanned aircraft, such as balloons and helicopters. HALE aircraft are those typically capable of flying as high as 18,288 metres (60,000 feet) with an endurance of 32 hours or more. They typically loiter at a low velocity. Medium-altitude long endurance (MALE) aircraft, are those aircraft typically designed to operate between 3,048 metres (10,000) feet and 9,144 metres (30,000 feet) for periods up to 48 hours.

The aircraft 100 includes a payload 2 coupled to the front central part of a wing structure 6. The wing structure 6 includes a wing on either side of a central part. A fuselage 4 is coupled to the rear of the central part of the wing structure 6. An empennage 8 having tail surfaces for controlling the pitch and yaw of the aircraft 100 is coupled to the rear of the fuselage 4.

Due to the aircraft 100 being required to operate efficiently at high altitudes, the aircraft 100 is fitted with a wing structure 6 having a high aspect ratio. High altitudes are for example altitudes between about 16,000 metres and about 25,000 metres. Preferably, high altitudes are those between about 17,000 metres and about 21,000 metres. Wings with high aspect ratios provide more lift than low or moderate aspect ratio wings, and enable sustained endurance flight due to reduced drag. The aspect ratio is the ratio of the wing span to mean chord, equal to the square of the wingspan divided by the wing area. The wing aspect ratio of the aircraft 100 is preferably between about 17:1 and about 52:1. More preferably, the wing aspect ratio is between about 30:1 and about 40:1. For example, from the distal tip of each wing, the wing structure 6 is about 36 metres long. Preferably the wing span of the wing structure 6 is between about 30 and about 36 metres (for example about 35 metres). The mean chord of the wing structure 6 is about 1.2 metres. This results in an elongate wing structure.

Engines, batteries, and flight control systems are housed in nacelles in each wing of the wing structure 6, either side of the centre of the wing. Alternatively, the engines, batteries and flight control systems are housed in pods coupled to each wing of the wing structure 6.

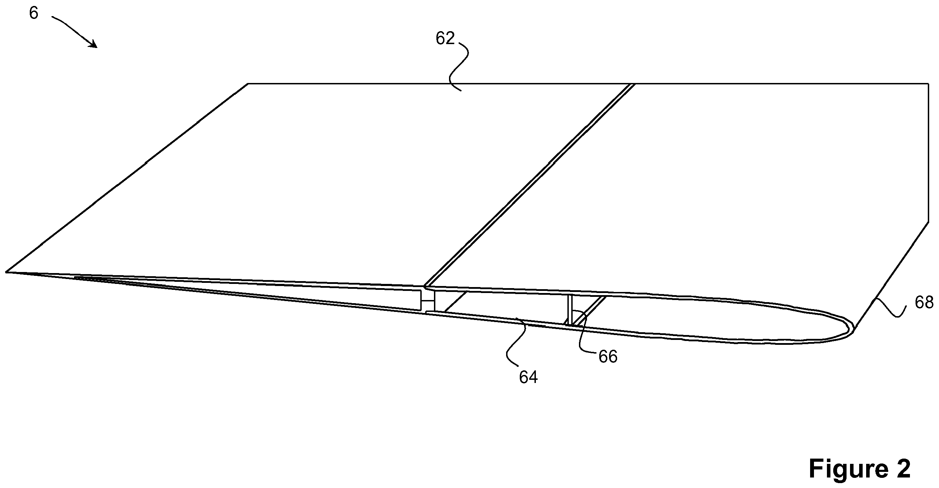

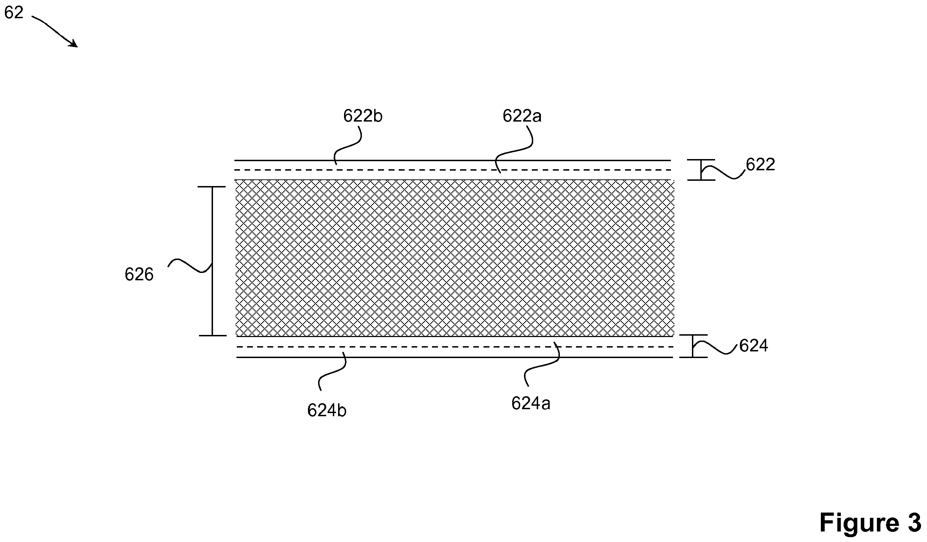

Figure 2 shows a cross section through the wing structure 6. The wing structure 6 includes a leading-edge strip 68. An upper skin 62 and lower skin 64 are joined or bonded together at the leading edge of the wing structure 6 by the leading-edge strip 68 to form an aerofoil shape. The upper skin 62 and lower skin 64 each comprise a skin structure as described with reference to Figure 3.

In an alternative embodiment, the wing structure 6 comprises only one structure, such as the upper skin 62 or lower skin 64. Here, the single structure is moulded around a foam core to form an aerofoil shape.

The height of the leading-edge strip 68 is for example about 10-15 mm. The leading-edge strip 8 fits into a recess in the upper and lower portions. The leading-edge strip 8 is conformal with the wing structure external profile. The leading-edge strip 8 is continuous along the length of the wing structure 6.

An exemplary ply schedule for the leading-edge strip 68 is as follows:

| **Layer** | **Fibre orientation** | **Material** |
|---|---|---|
| 1 | +45 degrees | CRFC (carbon reinforced fibre composite) |
| | | Mitsubishi Pyrofil HS40 fibre (carbon fibre) - about 20 grams per metre squared (g/m²) |
| | | Thinpreg 402 epoxy - about 35% resin mass fraction |
| 2 | -45 degrees | CRFC |
| | | Mitsubishi Pyrofil HS40 fibre - about 20g/m² |
| | | Thinpreg 402 epoxy - about 35% resin mass fraction |
| 3 | -45 degrees | CRFC |
| | | Mitsubishi Pyrofil HS40 fibre - about 20gsm |
| | | Thinpreg 402 epoxy - about 35% resin mass fraction |
| 4 | +45 degrees | CRFC |
| | | Mitsubishi Pyrofil HS40 fibre - about 20g/m² |
| | | Thinpreg 402 epoxy - about 35% resin mass fraction |
| 5 | +45 degrees | CRFC |
| | | Mitsubishi Pyrofil HS40 fibre - about 20g/m² |
| | | Thinpreg 402 epoxy - about 35% resin mass fraction |
| 6 | -45 degrees | CRFC |
| | | Mitsubishi Pyrofil HS40 fibre - about 20g/m² |
| | | Thinpreg 402 epoxy - about 35% resin mass fraction |
| 7 | -45 degrees | CRFC |
| | | Mitsubishi Pyrofil HS40 fibre - about 20g/m² |
| | | Thinpreg 402 epoxy - about 35% resin mass fraction |
| 8 | +45 degrees | CRFC |
| | | Mitsubishi Pyrofil HS40 fibre - about 20g/m² |
| | | Thinpreg 402 epoxy - about 35% resin mass fraction |

| | | |
|---|---|---|
| *Note: the zero-degree orientation reference is along the long axis of the part.* | | |

The leading-edge strip 68 also has a layer of Kapton on its whole outer surface (i.e. over the whole joint/junction).

A spar shear web 66 couples the upper skin 62 and lower skin 64 at approximately the midpoint of the aerofoil cross section. More specifically, the spar shear web 66 is located at about 30% Mean Aerodynamic Chord, which in the specific example is about 360mm from the leading-edge strip 68 across the length of the wing section 6. The distance between the leading and trailing edge of the wing, measured parallel to the normal airflow over the wing, is known as the chord. If the leading edge and trailing edge are parallel, the chord of the wing is constant along the wing's length. The width of the wing is greatest where it meets the fuselage at the wing root and progressively decreases toward the tip. As a consequence, the chord also changes along the span of the wing. The average length of the chord is known as the Mean Aerodynamic Chord. The spar shear web 66 extends through the longitudinal axis of the wing structure 6, i.e. from tip to tip. The spar shear web 66 takes the form of an I-beam. The spar shear web 66 carries the bending loads of the wing structure 6.

The upper and lower spar caps, i.e. the top and bottom parts of the I-shaped beam, are about 3mm deep when consolidated. The spar caps are constructed using carbon fibre composite. In an exemplary embodiment, the spar caps are made from high-strength unidirectional carbon fibre composite, such as Mitsubishi Pyrofil MR70 (with the carbon fibres of the plies running in the direction of the long-axis (spanwise on the aircraft)). The spar caps are encapsulated within carbon fibre composite skins 662, 664. The width of the spar caps is varied between about 10mm and about 20mm locally along the wing structure 6 to optimise the mass of the spar shear web 66 as a function of the local wing loads.

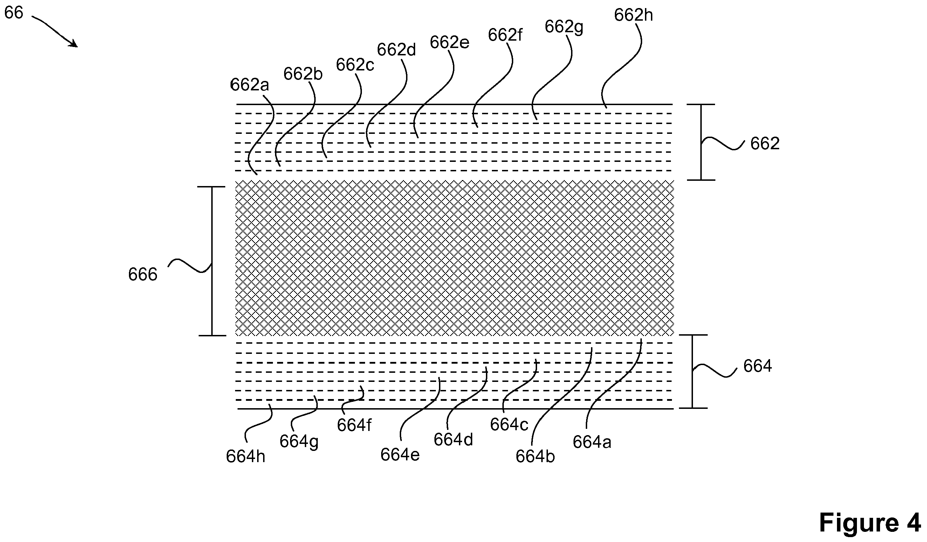

The spar shear web 66, shown in Figure 4, includes an about 5mm thick foam/carbon fibre sandwich panel 666 disposed between the upper and lower spar caps, perpendicular to their longitudinal axis. The foam core of the sandwich is cut from Rohacell 31 IG foam. An exemplary ply schedule for the spar shear web 66 panel is as follows:

| **Layer** | **Fibre orientation** | **Material** |
|---|---|---|
| 1 | +45 degrees | CRFC |
| | | Mitsubishi Pyrofil HS40 fibre - about 20g/m² |
| | | Thinpreg 402 epoxy - about 35% resin mass fraction |
| 2 | -45 degrees | CRFC |
| | | Mitsubishi Pyrofil HS40 fibre - about 20g/m² |
| | | Thinpreg 402 epoxy - about 35% resin mass fraction |
| 3 | 0 degrees | CRFC |
| | | Mitsubishi Pyrofil HS40 fibre - about 20g/m² |
| | | Thinpreg 402 epoxy - about 35% resin mass fraction |
| 4 | -45 degrees | CRFC |
| | | Mitsubishi Pyrofil HS40 fibre - about 20g/m² |
| | | Thinpreg 402 epoxy - about 35% resin mass fraction |
| 5 | +45 degrees | CRFC |
| | | Mitsubishi Pyrofil HS40 fibre - about 20g/m² |
| | | Thinpreg 402 epoxy - about 35% resin mass fraction |
| 6 | +45 degrees | CRFC |
| | | Mitsubishi Pyrofil HS40 fibre - about 20g/m² |
| | | Thinpreg 402 epoxy - about 35% resin mass fraction |
| 7 | -45 degrees | CRFC |
| | | Mitsubishi Pyrofil HS40 fibre - about 20g/m² |
| | | Thinpreg 402 epoxy - about 35% resin mass fraction |
| 8 | 0 degrees | CRFC |
| | | Mitsubishi Pyrofil HS40 fibre - about 20g/m² |
| | | Thinpreg 402 epoxy - about 35% resin mass fraction |
| 9 | n/a | Film Adhesive GF736 - about 25g/m² epoxy resin |
| 10 | n/a | Rohacell 31IG sheet - about 5mm thick foam |
| 11 | n/a | Film Adhesive GF736 - about 25g/m² epoxy resin |
| 12 | 0 degrees | CRFC |
| | | Mitsubishi Pyrofil HS40 fibre - about 20g/m² |
| | | Thinpreg 402 epoxy - about 35% resin mass fraction |
| 13 | -45 degrees | CRFC |
| | | Mitsubishi Pyrofil HS40 fibre - about 20g/m² |
| | | Thinpreg 402 epoxy - about 35% resin mass fraction |
| 14 | +45 degrees | CRFC |
| | | Mitsubishi Pyrofil HS40 fibre - about 20g/m² |
| | | Thinpreg 402 epoxy - about 35% resin mass fraction |
| 15 | +45 degrees | CRFC |
| | | Mitsubishi Pyrofil HS40 fibre - about 20g/m² |
| | | Thinpreg 402 epoxy - about 35% resin mass fraction |
| 16 | -45 degrees | CRFC |
| | | Mitsubishi Pyrofil HS40 fibre - about 20g/m² |
| | | Thinpreg 402 epoxy - about 35% resin mass fraction |
| 17 | 0 degrees | CRFC |
| | | Mitsubishi Pyrofil HS40 fibre - about 20g/m² |
| | | Thinpreg 402 epoxy - about 35% resin mass fraction |
| 18 | -45 degrees | CRFC |
| | | Mitsubishi Pyrofil HS40 fibre - about 20g/m² |
| | | Thinpreg 402 epoxy - about 35% resin mass fraction |
| 19 | +45 degrees | CRFC |
| | | Mitsubishi Pyrofil HS40 fibre - about 20g/m² |
| | | Thinpreg 402 epoxy - about 35% resin mass fraction |

Where the spar shear web 66 bonds to the upper skin 62 and lower skin 64, an about 5mm radius curve is added to prevent sharp folding and consequently damage of the fibre in the composite skins.

The total thickness of the spar shear web 66 in the exemplary embodiment is about 5.4mm. In other words, each of the sixteen layers of carbon fibre composite 662a-h, 664a-h is about 25µm thick, and the foam core 666 is about 5mm thick. In further embodiments, the foam core 666 has a thickness between about 1mm and about 10mm, and each layer of carbon fibre composite 662a-h, 664a-h has a thickness between about 10µm and about 50µm. In further embodiments, each layer of carbon fibre composite 662a-h, 664a-h has a thickness between about 15µm and about 40µm. In further embodiments, each layer of carbon fibre composite 662a-h, 664a-h has a thickness between about 20µm and about 30µm.

Although not shown in the Figures, ribs are disposed within the wing structure 6, in the lateral direction of the wing structure 6. The ribs are a carbon fibre composite and polymethacrylimide sandwich construction. The ribs are located at a regular 500mm spacing along the wing structure 6 to provide accurate definition of the wing structure 6 and to increase pitching stiffness of the wing structure 6. Additional ribs are added at certain locations such as above the motor pods and fuselage joiner, where the wing structure 6 couples to the fuselage 4.

The ribs are Computer Numerical Controlled (CNC) machined from flat pre-cured sandwich panel material (pre-preg) that uses Mitsubishi Pyrofil HS40 fibre - about 20g/m² and Thinpreg 402 epoxy - about 35% resin fraction skins and an about 50g/m² Redux 312 epoxy film adhesive to bond to the about 3mm thick Rohacell 31 IG foam core.

Rohacell 31 IG is a closed-cell rigid foam based on polymethacrylimide (PMI) chemistry. It has a density of about 32kg/m³, a compressive strength of about 0.4MPa, compressive modulus of about 17MPa, tensile strength of about 1.0MPa, tensile modulus of about 36MPa, shear strength of about 0.4MPa and shear modulus of about 13MPa. It would be appreciated that other foams having similar characteristics may be used, such as polyurethane foam or polyethylene foam.

The construction of the upper skin 62 of the wing structure 6 will now be described with reference to Figure 3. The lower skin 64 is constructed using the same technique as will now be described, albeit using a different mould to achieve a different shape.

The upper skin 62 of the wing structure 6 is a composite sandwich panel constructed from a laminate of carbon fibre plies 622a (i.e. first carbon fibre composite layer), 622b (i.e. third carbon fibre composite layer), 624a (i.e. second carbon fibre composite layer), 624b (i.e. fourth carbon fibre composite layer), and a core material 626 disposed/sandwiched between two groups 622, 624 of plies. In an exemplary embodiment, the core material 626 is Rohacell 31 IG foam. The core material 626 is about 3mm thick. The lower carbon fibre composite layer 624 comprises two carbon fibre composite plies 624a, 624b. Each carbon fibre composite ply 624a, 624b is about 25µm thick. The upper carbon fibre composite layer 622 comprises two carbon fibre composite plies 622a, 622b. Each carbon fibre composite ply 622a, 622b is about 25µm thick. The total thickness of the upper skin 62 in the exemplary embodiment is about 3.1mm. In other words, each of the four layers (plies) of carbon fibre composite 622a-b, 624a-b is about 25µm thick, and the foam core 626 is about 3mm thick. In further embodiments, the foam core 626 has a thickness between about 1mm and about 10mm, and each layer of carbon fibre composite 622a-b, 624a-b has a thickness between about 10µm and about 50µm. In further embodiments, each layer of carbon fibre composite 622a-b, 624a-b has a thickness between about 15µm and about 40µm. In further embodiments, each layer of carbon fibre composite 622a-b, 624a-b has a thickness between about 20µm and about 30µm.

The upper skin 62 and lower skin 64 are manufactured within a female mould so that the outer surface of the wing structure 6 is the smooth moulded surface. The moulding occurs using a 'single step' approach, in an oven with 1 atmosphere pressure. All composite parts are post-cured such that the glass transition temperature (Tg) is greater than about 80°C.

An exemplary ply schedule for the upper skin 62 is as follows:

| **Layer** | **Fibre orientation** | **Material** |
|---|---|---|
| 1 | +45 degrees | CRFC |
| | | Mitsubishi Pyrofil HS40 fibre - about 20g/m² |
| | | Thinpreg 402 epoxy - about 35% resin fraction |
| 2 | -45 degrees | CRFC |
| | | Mitsubishi Pyrofil HS40 fibre - about 20g/m² |
| | | Thinpreg 402 epoxy - about 35% resin fraction |
| 3 | n/a | GF736 epoxy film adhesive about 25g/m² epoxy resin |
| 4 | n/a | Rohacell 31IG, about 3mm foam |
| 5 | n/a | GF736 epoxy film adhesive about 25g/m² epoxy resin |
| 6 | -45 degrees | CRFC |
| | | Mitsubishi Pyrofil HS40 fibre - 20g/m² |
| | | Thinpreg 402 epoxy - about 35% resin fraction |
| 7 | +45 degrees | CRFC |
| | | Mitsubishi Pyrofil HS40 fibre - about 20g/m² |
| | | Thinpreg 402 epoxy - about 35% resin fraction |

| | | |
|---|---|---|
| *Note: fibre orientation 0-degree reference is spanwise across the wing.* | | |

Orienting the fibres in the carbon fibre composite plies 622a, 622b, 624a, 624b such that they are orthogonal to each other tends to improve the torsional stiffness of the upper skin 62, and hence wing as a whole. While orthogonal orientation is preferable, similar advantage tends to be achieved through having fibres arranged at other angles, such as about 70 degrees (for example, fibres in one layer 622a arranged at about -30 degrees and fibres in the other layer 622b arranged at about +40 degrees). Other examples include the fibres in adjacent carbon fibre plies 622a, 622b being arranged at about 50 degrees to each other (for example, fibres in one layer 622a arranged at about -10 degrees and fibres in the other layer 622b arranged at about +40 degrees; about 40 degrees to each other (for example, fibres in one layer 622a arranged at about - 30 degrees and fibres in the other layer 622b arranged at about +10 degrees); about 70 degrees to each other (for example, fibres in one layer 622a arranged at about -35 degrees and fibres in the other layer 622b arranged at about +35 degrees); and about 80 degrees to each other (for example, fibres in one layer 622a arranged at about -30 degrees and fibres in the other layer 622b arranged at about +40 degrees.

The skin structure of the upper skin 62 is substantially the same as the skin structure of the fuselage 4, engine pods and empennage 8.

Figure 4 demonstrates the effectiveness of the described skin structure of the wing structure 6. At the furthest point from the fuselage, the wing structure deflects by about 0.43 metres (1.14% of wing span) when the aircraft 100 is performing a +2.5g manoeuvre at an equivalent airspeed (EAS) of 11.1ms⁻¹. This is a relatively small deflection, given the whole mass of the structure forming the aircraft 100 is about 42.6kg.

The present disclosure tends to provide a wing structure that is strong yet light enough to be suitable for high-altitude long-endurance flight.

While a fixed wing aircraft 100 has been described, it would be readily appreciated that the skin structure could be applied to a different type of vehicle. For example, instead of a wing structure, the described skin structure could be applied in a similar manner to the rotor blade of a helicopter.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. An aircraft wing, the aircraft wing comprising:
at least one structure comprising:
a foam core;
first and second carbon fibre composite layers respectively attached to top and bottom sides of the foam core to sandwich the foam core; and
third and fourth carbon fibre composite layers respectively disposed adjacent to the first and second carbon fibre composite layers, wherein the total thickness of the structure is between 1mm and 11mm.

2. The aircraft wing according to claim 1, wherein the at least one structure is an upper skin, a lower skin or a spar, or any combination thereof.

3. The aircraft wing according to claim 2, wherein the upper skin and lower skin are joined to form an aerofoil and wherein the wing comprises a spar disposed between the upper skin and lower skin in the longitudinal direction of the wing structure.

4. The aircraft wing according to claim 2 or 3, wherein the upper skin and/or lower skin do not have a further carbon fibre composite layer to the first, second, third and fourth carbon fibre composite layers.

5. The aircraft wing according to any one of the preceding claims, wherein the foam core has a thickness of between 1mm and 10mm.

6. The aircraft wing according to any one of the preceding claims, wherein the first, second, third and fourth carbon fibre composite layers are each between 10µm and 50µm thick.

7. The aircraft wing according to any one of claims 2 to 5, wherein the spar comprises an elongate panel, wherein top and bottom flanges of the panel curve away from the panel to couple the panel to the upper skin and lower skin.

8. The aircraft wing according to any one of claims 2, 3 or 5 to 7, wherein the spar further comprises:
respectively disposed adjacent to the third and fourth carbon fibre composite layers, fifth and sixth carbon fibre composite layers;
respectively disposed adjacent to the fifth and sixth carbon fibre composite layers, seventh and eighth carbon fibre composite layers;
respectively disposed adjacent to the seventh and eighth carbon fibre composite layers, ninth and tenth carbon fibre composite layers;
respectively disposed adjacent to the ninth and tenth carbon fibre composite layers, eleventh and twelfth carbon fibre composite layers;
respectively disposed adjacent to the eleventh and twelfth carbon fibre composite layers, thirteenth and fourteenth carbon fibre composite layers; and
respectively disposed adjacent to the thirteenth and fourteenth carbon fibre composite layers, fifteenth and sixteenth carbon fibre composite layers;
wherein the first, second, third, fourth, fifth, sixth, seventh, eighth, ninth, tenth, eleventh, twelfth, thirteen, fourteenth, fifteenth and sixteenth carbon fibre composite layers are each between 10µm and 50µm thick.

9. The aircraft wing according to any one of claims 2 to 8, wherein the spar is disposed at between 24% and 36% Mean Aerodynamic Chord.

10. The aircraft wing according to any one of the preceding claims, wherein each carbon fibre composite layer comprises 30 to 40 mass percent resin and 60 to 70 mass percent carbon fibre.

11. The aircraft wing according to any one of the preceding claims, wherein fibres in the first carbon fibre layer are arranged orthogonally to fibres in the third carbon fibre layer and wherein fibres in the second carbon fibre layer are arranged orthogonally to fibres in the fourth carbon fibre layer.

12. The aircraft wing according to any one of the preceding claims, wherein the foam core is a polymer foam core.

13. The aircraft wing according to any one of the preceding claims, wherein each carbon fibre composite layer has a glass transition temperature greater than 80 degrees Celsius.

14. An aircraft comprising the aircraft wing according to any one of the preceding claims, wherein the aircraft wing has an aspect ratio greater than 17:1.

15. A method of manufacturing a structure, the method comprising:
providing a mould tool having a mould surface;
providing an uncured structure, the uncured structure comprising
a foam core;
first and second carbon fibre composite layers respectively attached to top and bottom sides of the foam core to sandwich the foam core; and
third and fourth carbon fibre composite layers respectively disposed adjacent to the first and second carbon fibre composite layers;
applying the uncured structure to the mould surface of the mould tool so as to form an assembly;
curing the assembly so as to cure the uncured structure and mould the uncured structure against the mould surface, thereby producing the structure having a surface that is substantially the same shape as and contiguous with the mould surface, to provide an aircraft wing according to any one of claims 1 to 14.
